# EUROPEAN PATENT SPECIFICATION

(11) **EP 3 550 069 B1**
(45) Date of publication and mention of the grant of the patent: **04.03.2020**
(21) Application number: 18382226.1
(22) Date of filing: 03.04.2018
(51) Int. Cl.: D07B 3/04, D07B 7/02, D07B 7/04, H01B 13/02

(54) **MACHINE FOR MANUFACTURING CABLES**
MASCHINE ZUR HERSTELLUNG VON KABELN
MACHINE DE FABRICATION DE CÂBLES

(43) Date of publication of application: 09.10.2019
(73) Proprietor: Construcciones Mecanicas Caballe, S.A., 08918 Badalona (Barcelona) (ES)
(72) Inventor: BERENGUER ATENZA, ANTONIO, 08918 BADALONA (BARCELONA) (ES)
(74) Representative: Durán-Corretjer, S.L.P.

(56) References cited:
- DE-B- 1 083 712
- ES-A1- 2 169 631
- US-A- 2 477 690

## Description

The present invention relates to a machine for manufacturing cables. More specifically, the present invention relates to a motor arrangement of said machine.

Machines for manufacturing cables comprise a rotary tube, inside which is a motor. The attachment of the motor must withstand the high stresses produced by centrifugal forces, secure the yoke pieces of the motor itself such that said motor does not have to endure the centrifugal forces of the yoke pieces thereof or endure the gyroscopic torque resulting from the fact that the rotation of the tube, in which the motor (rotor) is located, and the rotation of the motor are produced on mutually perpendicular axes.

US 2 477 690 A discloses a machine for manufacturing cables according to the pre-characterising portion of claim 1.

An object of the present invention is to disclose improved attachment of the motor in this type of machine, which makes it possible to increase the performance of the machine, for example to increase the nominal rotational speed of the tube or rotor, or the diameter thereof, or reduce the thickness of the rotor tube.

For this purpose, the present invention discloses a machine for manufacturing cables which comprises a rotor tube inside which is a motor, wherein the machine comprises four rods attached to the tube, the rods being arranged so as to follow secant lines with respect to the cross section of the wall of the tube and said machine further comprising two parallel plates, each plate being connected to the four rods, the four rods being arranged such that they exert a force on the wall of the tube towards the inside of the tube in order to compensate for the effect of the centrifugal force, the motor being positioned between said plates.

This arrangement makes it possible to successfully attach the motor, making it possible to secure the yoke pieces without the motor itself having to endure the centrifugal forces on the yoke pieces thereof, since by placing the motor between the plates, the yoke pieces are secured, and therefore the motor is not required to endure its own centrifugal forces. The preloading compensates for the effect of the centrifugal force on the rods, which tends to stretch said rods, resulting in deformation of the rotor tube, and/or in the separation of the reinforcement rings from the tube and putting at risk the attachment of the motor and/or the structural integrity of the assembly. In turn, the rods prevent expansion of the rotor tube and adjacent elements caused by the same centrifugal force.

Preferably, the rods are screwed through the outside of the rotor tube. More preferably, they are screwed onto a reinforced zone of the wall of the tube.

Advantageously, the four rods are arranged so as to be mutually parallel. More advantageously, the rods are arranged in a rectangular arrangement.

Preferably, the tube comprises at least one reinforcement ring on the outside of the rotor tube, and more preferably comprises at least two. Preferably, each rod is screwed onto a reinforcement ring, such that said force is exerted by the rods on the relevant reinforcement ring. In this way, the preloading produced by the rods compensates for the expansion of the rings produced by the centrifugal force generated by the rotation of the rotor tube.

Preferably, the machine comprises crossbars, as safety elements, which connect said plates. Preferably, there are four of said crossbars.

To aid understanding, an explanatory yet non-limiting drawing is included of an embodiment of the machine according to the invention.

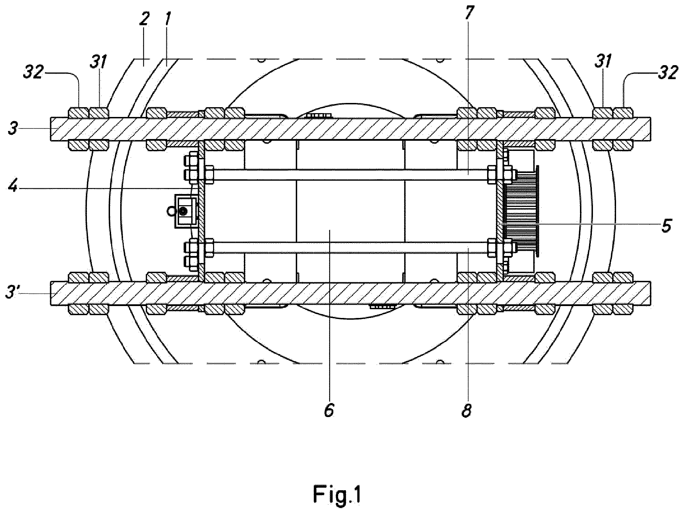

Fig. 1 shows a cross section of the rotor tube of a machine according to the present invention, an embodiment of an arrangement of the motor of said machine being visible.

In the figure, an embodiment is shown in which four rods have been arranged so as to be connected to the tube in a rectangular arrangement, all of said rods being mutually parallel. Fig. 1 shows a section transverse to the axis of the rotor tube -1- at the level of two of the rods, which is why only two rods -3-, -3'- are visible.

In this embodiment, there are two reinforcement rings -2- (in the figure only one is visible, corresponding to the attachment of two rods -3-, -3'-). Said rings -2- are arranged on the outside of the tube and rigidify the wall.

The threaded rods -3-, -3'- are arranged so as to follow a secant direction with respect to the wall of the rotor tube -1-, and more specifically, in this case, secant with respect to the cross section of the wall of the rotor tube -3-, -3'-. The rods are attached, in this case, by means of a nut and locknut -31-, -32-. The rods -3-, -3'- are attached on the rings -2-, preloading said rings, thus compensating for the centrifugal force, which has the tendency to expand the rings.

The plates -4-, -5- are attached to the rods -3-, -3'-. The motor -6- is positioned between the plates -4-, -5-. In this way, the yoke pieces of the motor are secured and the motor does not have to endure its own centrifugal forces.

As a safety element, four crossbars -7-, -8- have been positioned in a rectangular arrangement, connecting the two plates -4-, -5-.

Although the invention has been set out and described with reference to embodiments thereof, it should be understood that these do not limit the invention, and that it is possible to alter many structural or other details that may prove obvious to persons skilled in the art after interpreting the subject matter disclosed in the present description, claims and drawings. Therefore, the scope of the present invention includes any variant that could be considered covered by the scope of the following claims.

## Claims

1. Machine for manufacturing cables, comprising a rotor tube (1) inside which is a motor (6), **characterised in that** the machine comprises four rods (3, 3') attached to the rotor tube (1), the rods (3, 3') being arranged so as to follow secant lines with respect to the cross section of the wall of the rotor tube (1) and said machine further comprising two mutually parallel plates (4, 5), each plate (4, 5) being connected to the four rods (3, 3'), the four rods (3, 3') being arranged such that they exert a force on the wall of the rotor tube (1) towards the inside of the rotor tube (1) in order to compensate for the effect of the centrifugal force, the motor (6) being positioned between said plates (4, 5).

2. Machine according to claim 1, **characterised in that** the rods (3, 3') are screwed through the outside of the rotor tube (1).

3. Machine according to either claim 1 or claim 2, **characterised in that** the rods (3, 3') are screwed onto a reinforced zone of the wall of the rotor tube (3, 3').

4. Machine according to claims 2 and 3, **characterised in that** each rod (3, 3') is screwed onto a reinforcement ring (2), such that said force is exerted by the rods (3, 3') on the relevant reinforcement ring (2).

5. Machine according to any one of claims 1 to 4, **characterised in that** the rods (3, 3') are arranged so as to be mutually parallel.

6. Machine according to claim 5, **characterised in that** the rods (3, 3') are arranged in a rectangular arrangement.

7. Machine according to either claim 5 or claim 6, **characterised in that** the plates (4, 5) are arranged perpendicularly to the rods (3, 3').

8. Machine according to any one of claims 1 to 7, **characterised in that** yoke pieces of the motor (6) are attached to the plates (4, 5).

9. Machine according to any one of claims 1 to 8, **characterised in that** crossbars (7, 8) are provided which connect the two plates (4, 5).

10. Machine according to claim 9, **characterised in that** four crossbars (7, 8) are provided.

## Patentansprüche

1. Maschine zur Herstellung von Kabeln umfassend ein Rotorrohr (1), in dem sich ein Motor (6) befindet, **dadurch gekennzeichnet, dass** die Maschine vier Stangen (3, 3') umfasst, die an dem Rotorrohr (1) befestigt sind, wobei die Stangen (3, 3') so angeordnet sind, dass sie Schnittlinien in Bezug auf den Querschnitt der Wand des Rotorrohrs (1) folgen, und wobei die Maschine des Weiteren zwei zueinander parallele Platten (4, 5) umfasst, wobei jede Platte (4, 5) mit den vier Stangen (3, 3') verbunden ist, wobei die vier Stangen (3, 3') so angeordnet sind, dass sie eine Kraft auf die Wand des Rotorrohrs (1) in Richtung des Inneren des Rotorrohrs (1) ausüben, um die Wirkung der Zentrifugalkraft zu kompensieren, wobei der Motor (6) zwischen den Platten (4, 5) angeordnet ist.

2. Maschine nach Anspruch 1, **dadurch gekennzeichnet, dass** die Stangen (3, 3') durch die Außenseite des Rotorrohres (1) verschraubt sind.

3. Maschine nach entweder Anspruch 1 oder Anspruch 2, **dadurch gekennzeichnet, dass** die Stangen (3, 3') auf einen verstärkten Bereich der Wand des Rotorrohres (3, 3') aufgeschraubt sind.

4. Maschine nach den Ansprüchen 2 und 3, **dadurch gekennzeichnet, dass** jede Stange (3, 3') auf einen Verstärkungsring (2) geschraubt ist, so dass die Kraft durch die Stangen (3, 3') auf den entsprechenden Verstärkungsring (2) ausgeübt wird.

5. Maschine nach einem der Ansprüche 1 bis 4, **dadurch gekennzeichnet, dass** die Stangen (3, 3') parallel zueinander angeordnet sind.

6. Maschine nach Anspruch 5, **dadurch gekennzeichnet, dass** die Stangen (3, 3') in einer rechteckigen Anordnung angeordnet sind.

7. Maschine nach entweder Anspruch 5 oder Anspruch 6, **dadurch gekennzeichnet, dass** die Platten (4, 5) senkrecht zu den Stangen (3, 3') angeordnet sind.

8. Maschine nach einem der Ansprüche 1 bis 7, **dadurch gekennzeichnet, dass** Jochteile des Motors (6) an den Platten (4, 5) befestigt sind.

9. Maschine nach einem der Ansprüche 1 bis 8, **dadurch gekennzeichnet, dass** Querträger (7, 8) vorgesehen sind, die die beiden Platten (4, 5) verbinden.

10. Maschine nach Anspruch 9, **dadurch gekennzeichnet, dass** vier Querträger (7, 8) vorgesehen sind.

## Revendications

1. Machine pour fabriquer des cables, comprenant un rotor tubulaire (1) à l'intérieur duquel se trouve un moteur (6), **caractérisée en ce que** la machine comprend quatre tiges (3, 3') attachées au rotor tubulaire (1), les tiges (3, 3') étant disposées de façon à suivre des lignes sécantes par rapport à la section transversale de la paroi du rotor tubulaire (1), et ladite machine comprenant en outre deux plaques parallèles l'une à l'autre (4, 5), chaque plaque (4, 5) étant connectée aux quatre tiges (3, 3'), les quatre tiges (3, 3') étant disposées de telle sorte qu'elles exercent une force sur la paroi du rotor tubulaire (1) en direction de l'intérieur du rotor tubulaire (1) de façon à compenser l'effet de la force centrifuge, le moteur (6) étant positionné entre lesdites plaques (4, 5).

2. Machine selon la revendication 1, **caractérisée en ce que** les tiges (3, 3') sont vissées à travers l'extérieur du rotor tubulaire (1).

3. Machine selon l'une de la revendication 1 ou de la revendication 2, **caractérisée en ce que** les tiges (3, 3') sont vissées sur une zone renforcée de la paroi du rotor tubulaire (3, 3').

4. Machine selon les revendications 2 et 3, **caractérisée en ce que** chaque tige (3, 3') est vissée sur un anneau de renforcement (2), de telle sorte que ladite force est exercée par les tiges (3, 3') sur l'anneau de renforcement (2) approprié.

5. Machine selon l'une quelconque des revendications 1 à 4, **caractérisée en ce que** les tiges (3, 3 ') sont disposées de façon à être parallèles l'une par rapport à l'autre.

6. Machine selon la revendication 5, **caractérisée en ce que** les tiges (3, 3') sont disposées selon une disposition rectangulaire.

7. Machine selon l'une ou l'autre de la revendication 5 ou de la revendication 6, **caractérisée en ce que** les plaques (4, 5) sont disposées perpendiculairement par rapport aux tiges (3, 3').

8. Machine selon l'une quelconque des revendications 1 à 7, **caractérisée en ce que** des pièces de blocage du moteur (6) sont fixées aux plaques (4, 5).

9. Machine selon l'une quelconque des revendications 1 à 8, **caractérisée en ce qu'**on prévoit des barres transversales (7, 8) qui relient les deux plaques (4, 5).

10. Machine selon la revendication 9, **caractérisée en ce qu'**on prévoit quatre barres transversales (7, 8).
